# EUROPÄISCHE PATENTSCHRIFT

(11) **EP 3 178 646 B1**
(45) Veröffentlichungstag und Bekanntmachung des Hinweises auf die Patenterteilung: **03.10.2018**
(21) Anmeldenummer: 15198521.5
(22) Anmeldetag: 08.12.2015
(51) Int. Cl.: B32B 7/04, B32B 7/06, B32B 27/32, B32B 37/04, B29C 65/00, B29C 65/02, B29C 65/16, A47J 47/00

(54) **VERBUNDWERKSTOFF FÜR EIN SCHNEIDBRETT UND VERFAHREN ZU DESSEN HERSTELLUNG**
COMPOSITE MATERIAL FOR A CHOPPING BOARD AND METHOD FOR PRODUCING THE SAME
MATIERE COMPOSITE POUR UNE PLANCHE DE DECOUPAGE ET SON PROCEDE DE FABRICATION

(43) Veröffentlichungstag der Anmeldung: 14.06.2017
(73) Patentinhaber: Margret Lutz GmbH & Co. KG, 72662 Nürtingen (DE)
(72) Erfinder: Lutz jun., Karl, 72622 Nürtingen (DE); Lutz sen., Karl, 72622 Nürtingen (DE); Lutz, Alexander, 3047 Bremgarten bei (CH)
(74) Vertreter: Jakelski & Althoff Patentanwälte PartG mbB

(56) Entgegenhaltungen:
- WO-A1-2014/074062
- DE-A1- 19 808 569
- DE-U1-202004 007 901
- US-A1- 2005 082 732
- US-A1- 2011 031 672
- DATABASE WPI Week 200282 Thomson Scientific, London, GB; AN 2002-754088 XP002754622, & JP 2002 253432 A (IKEUCHI J) 10. September 2002 (2002-09-10)
- DATABASE WPI Week 200227 Thomson Scientific, London, GB; AN 2002-211604 XP002754623, & JP 2002 000473 A (CHUEI BUSSAN KK) 8. Januar 2002 (2002-01-08)

## Beschreibung

Die vorliegende Erfindung betrifft ein Verfahren zur Herstellung eines Verbundwerkstoffs. Dieser kann als Schneidbrett für Lebensmittel verwendet werden.

### Stand der Technik

Schneidbretter für Lebensmittel, wie sie beispielsweise sowohl in der Fleischproduktion als auch an den Fleischtheken von Metzgereien und Supermärkten verwendet werden, bestanden ursprünglich aus Holz. Da feuchte Holzoberflächen jedoch schnell von Mikroorganismen besiedelt werden, genügen solche Schneidbretter nicht mehr dem heute geforderten HACCP-Konzept (Hazard Analysis and Critical Control Points). Um die geforderten Hygienestandards erfüllen zu können, wurden die hölzernen Schneidbretter durch Kunststoffbretter ersetzt. Auch diese können die HACCP-Anforderungen jedoch nur so lange erfüllen, wie ihre Oberfläche weitgehend frei von Einschnitten ist, in welchen sich Schmutz festsetzen kann und die demnach als Brutstätte für Mikroorganismen dienen können. Diesem Problem wird durch ein regelmäßiges Glätten der Schneidbrettoberflächen mittels Abhobeln begegnet. Da diese Hobelarbeiten nicht von den Anwendern der Schneidbretter selbst durchgeführt werden können, sondern eines externen Dienstleisters bedürfen, werden üblicherweise bei einem Besuch des externen Dienstleisters alle vor Ort vorhandenen Schneidbretter unabhängig von ihrem Abnutzungsgrad oberflächlich geglättet. Dies ist mit hohen Kosten verbunden.

Es besteht daher ein Bedarf nach einem Schneidbrett, dessen Oberfläche vom Anwender selbst geglättet werden kann, sobald dieses einen nicht mehr akzeptablen Abnutzungsgrad erreicht hat. Diese Glättung sollte ohne spezielle Werkzeuge möglich sein, die beim Anwender des Schneidbretts möglicherweise entweder nicht vorhanden sind oder in deren Nutzung er nicht geschult ist. Es wurde vorgeschlagen hierzu mehrere dünne Kunststoffplatten aufeinander anzuordnen und zu einem Verbundwerkstoff zu verbinden. Sobald die Oberfläche eines Schneidbretts, welches aus einem solchen Verbundwerkstoff besteht, abgenutzt ist, kann die oberste Kunststoffplatte einfach von einem Anwender mittels eines Messers abgetrennt werden, um so wieder eine frische Kunststoffoberfläche bereitzustellen. Erste derartige Schneidbretter, deren Kunststoffplatten nur an ihren peripheren Ecken miteinander verbunden sind, haben zu hygienisch unbefriedigenden Ergebnissen geführt. An den offenliegenden Rändern eines solchen Schneidbretts bestehen dort, wo zwei Platten aufeinanderliegen, Unebenheiten, in welche Schmutz eindringen kann und in welchen sich Mikroorganismen ansiedeln können. Wird eine abgenutzte Kunststoffplatte abgelöst, so kann es dazu kommen, dass darunter eine bereits oberflächlich mit Mikroorganismen kontaminierte Platte freigelegt wird. Deshalb wurde in der DE 20 2004 007 901 U1 vorgeschlagen, alle Ränder des Kunststoffplattenstapels mittels einer umlaufenden Verklebung aus einem thermoplastischen Gummi miteinander zu verbinden und gleichzeitig zu versiegeln. Auch in der WO 2014/074062 A1 wird eine umlaufende Verklebung eines Kunststoffplattenstapels beschrieben. Eine derartige Verklebung verkürzt allerdings die Lebensdauer des Schneidbretts deutlich. Für eine hygienische Reinigung des Schneidbretts gemäß dem HACCP-Konzept sind zunächst eine Reinigung in einer Geschirreinigungsmaschine bei einer Temperatur von 60°C und eine anschließende Desinfektion bei einer Temperatur von 83°C vorgesehen. Unter diesen Bedingungen findet eine schnelle Alterung der Verklebung statt, welche zu deren Ablösung führen kann. Zudem ist die Fertigung eines derartigen Schneidbretts aufwendig, da für jedes Schneidbrett ein separater Stapel von entsprechend zurecht geschnittenen Kunststoffplatten zusammengestellt und anschließend ringsum verklebt werden muss.

Aus der US 2011/0031672 A1 ist es bekannt, die Ränder eines Kunststoffplattenstapels auf verschiedene Weisen miteinander zu verbinden. Neben einem Verkleben wird auch ein thermisches Verschweißen der Ränder, beispielsweise mittels eines Lasers beschrieben. Letztere Verbindungsart ist hygienisch einwandfrei. Die Fertigung vieler Schneidbretter auf diese Weise ist allerdings aufwendig und zeitintensiv.

Es ist deshalb eine Aufgabe der vorliegenden Erfindung, ein Verfahren bereitzustellen, welches die einfache und schnelle Herstellung eines Verbundwerkstoffs aus mehreren aufeinander angeordneten Kunststoffplatten ermöglicht, die so miteinander verbunden sind, dass der Verbundwerkstoff bei Verwendung als Schneidbrett für Lebensmittel die Anforderungen des HACCP-Konzepts erfüllt. Das Verfahren soll die Herstellung des Verbundwerkstoffs insbesondere in den Abmessungen eines Schneidbretts ermöglichen.

### Offenbarung der Erfindung

Der Verbundwerkstoff weist mehrere aufeinander angeordnete erste Platten auf. Die ersten Platten bestehen jeweils aus demselben Kunststoff und weisen denselben Flächeninhalt auf. Außerdem weisen sie eine jeweils gleiche erste Dicke auf. Alle benachbarten Platten sind an allen Rändern des Verbundwerkstoffs thermisch miteinander verschweißt. Durch das thermische Verschweißen findet eine Glättung aller Seitenkanten des Verbundwerkstoffs statt. Die so erhaltene Schweißnaht ist fugenlos und bietet Verunreinigungen ebenso wenig eine Möglichkeit zur Einlagerung in den Verbundwerkstoff wie dessen Ober- und Unterseite. Damit wird eine Besiedelung des Verbundwerkstoffs mit Mikroorganismen auch dann verhindert, wenn dieser mit Lebensmitteln in Kontakt gebracht wird, die einen hervorragenden Nährboden für die Mikroorganismen darstellen würden.

Vorzugsweise weist der Verbundwerkstoff weiterhin eine zweite Platte auf. Diese besteht aus demselben Kunststoff wie die ersten Platten. Sie weist denselben Flächeninhalt auf wie die ersten Platten. Weiterhin weist sie eine zweite Dicke auf, welche größer als die erste Dicke ist. Die zweite Platte ist so angeordnet, dass sie eine Unterseite des Verbundwerkstoffs bildet. Sie ist an allen Rändern des Verbundwerkstoffs mit der benachbarten ersten Platte thermisch verschweißt. Wenn nacheinander mehrere erste Platten vom Verbundwerkstoff gelöst werden, wird dessen Gesamtdicke immer geringer, wodurch seine Steifheit immer weiter abnimmt. Würde der Verbundwerkstoff allerdings zu dünn, so bestünde die Gefahr, dass er durch Ausbilden einer Vertiefung an seiner Oberfläche verformt würde, wenn mit einem Messer auf ihn geschnitten würde. Dadurch würde seine Verwendbarkeit als Schneidbrett verringert. Die zweite Platte stellt sicher, dass selbst dann, wenn auf ihr keine ersten Platten mehr verbleiben, der Verbundwerkstoff immer noch so steif ist, dass er als Schneidbrett verwendet werden kann. Hierzu ist es besonders bevorzugt, dass die zweite Dicke im Bereich von 4,0 mm bis 6,0 mm liegt. Dies verleiht ihr auch ohne die ersten Platten eine hinreichende Steifigkeit für eine Verwendung als Schneidbrett.

Die erste Dicke liegt im Bereich von 1,5 mm bis 3,0 mm. Auf diese Weise wird verhindert, dass während der Nutzungsdauer einer an der Oberseite des Verbundwerkstoffs angeordneten ersten Platte ein Durchschneiden dieser Platte bis auf die darunterliegende erste Platte erfolgen kann. Gleichzeitig ist eine solche erste Dicke dünn genug, um beim Entfernen der obersten ersten Platte keine unnötige Materialverschwendung zu bewirken.

Die Gesamtdicke des Verbundwerkstoffs liegt vorzugsweise im Bereich von 20 mm bis 60 mm. Dabei wird unter der Gesamtdicke die Summe der ersten Dicken aller ersten Platten und der zweiten Dicke einer gegebenenfalls vorhandenen zweiten Platte verstanden. Auf diese Weise kann eine lange Verwendungsdauer des Verbundwerkstoffs bei gleichzeitig guter Handhabbarkeit erreicht werden. Die Gesamtdicke kann insbesondere in Abhängigkeit von der ersten Dicke gewählt werden. In Supermärkten, in denen nur Wurst, Käse und Fleisch geschnitten wird, ist der Messerdruck und damit die Kerbtiefe gering, so dass eine erste Dicke am unteren Rand des bevorzugten Bereichs gewählt werden kann. In der Fleischproduktion, in der Messer und Hackbeile kraftvoll eingesetzt werden, ist die Kerbtiefe deutlich höher, so dass die erste Dicke insbesondere am oberen Rand ihres bevorzugten Bereichs gewählt wird.

Das Verschweißen erfolgt bevorzugt mittels einer Schweißnaht mit einer Breite im Bereich von 0,5 mm bis 1,5 mm. Eine so dicke Schweißnaht verhindert, dass sich Platten des Verbundwerkstoffs unbeabsichtigt voneinander lösen. Gleichzeitig kann sie aber noch einfach mittels eines Messers durchschnitten werden, um die Platten so voneinander zu lösen. In dem Bereich des Verbundwerkstoffs, in dem keine Schweißnaht vorliegt, liegen die Platten ohne stoffschlüssige Verbindung aufeinander auf, so dass sie sich nach Durchschneiden der Schweißnaht mühelos separieren lasen.

Der Kunststoff ist vorzugsweise ausgewählt ist aus der Gruppe der Polyethylene, der Polypropylene, der Polyoxymethylene sowie deren Copolymeren. Unter den Polyethylenen können insbesondere LDPE, MDPE und HDPE eingesetzt werden. Diese Kunststoffe weisen eine ausreichende Oberflächenhärte auf, um die Verwendung des Verbundwerkstoffs als Schneidbrett zu ermöglichen. Sie sind hervorragend erforscht und pauschal für jedwede Anwendung im Lebensmittelbereich zugelassen. Außerdem lassen sie sich gut thermisch miteinander verschweißen. Verbrauchte erste Platten, die vom Verbundwerkstoff abgelöst wurden, können umweltfreundlich über einen Entsorgungsdienstleister entsorgt werden.

Alle Platten sind vorzugsweise unbeschichtet. Ebenso wie das Bestehen aller Platten aus demselben Kunststoff, sorgt auch das Fehlen einer Beschichtung auf den Platten dafür, dass der gesamte Verbundwerkstoff nur aus einem einzigen Kunststoff besteht, so dass seine Ränder gut miteinander verschweißbar sind.

Der Verbundwerkstoff kann als Schneidbrett für Lebensmittel verwendet werden. Durch eine solche Verwendung ist es möglich, die Hygieneanforderungen des HACCP-Konzepts zu erfüllen. Um eine sichere Positionierung des Schneidbretts auf einer Arbeitsplatte zu ermöglichen, ist es bei der Verwendung bevorzugt, dass der Verbundwerkstoff in einer Haltevorrichtung angeordnet ist. Diese Haltevorrichtung weist insbesondere eine Antirutschbeschichtung an ihrer Unterseite auf. Zur Reinigung und Desinfektion des Verbundwerkstoffs kann dieser aus der Haltevorrichtung entnommen wird.

Das Verfahren zur Herstellung des Verbundwerkstoffs umfasst das Bereitstellen mehrerer erster Platten, die aus demselben Kunststoff bestehen, die jeweils eine erste Dicke aufweisen und die jeweils denselben Flächeninhalt aufweisen. Die ersten Platten werden deckungsgleich aufeinander angeordnet, um einen Plattenstapel zu erhalten. Alle Platten des Plattenstapels werden thermisch verschweißt, um den Verbundwerkstoff zu erhalten.

Bevorzugt werden die ersten Platten auf einer zweiten Platte angeordnet, welche denselben Flächeninhalt wie die ersten Platten aufweist. Sie besteht aus demselben Kunststoff wie die ersten Platten und weist eine zweite Dicke auf, die größer als die erste Dicke ist. Bei dem thermischen Verschweißen aller Platten wird die zweite Platte mit einer ersten Platte verschweißt. Auf diese Weise kann ein Verbundwerkstoff mit erhöhter Steifigkeit erhalten werden. Hierzu genügt ein Verschweißen an den Rändern des zu erhaltenden Verbundwerkstoffs. Ein vollflächiges Verschweißen erfolgt nicht.

Das thermische Verschweißen erfolgt mittels eines Lasers, bevorzugt mittels eines CO₂-Lasers. Die Verwendung eines Lasers hat gegenüber anderen thermischen Verschweißungsverfahren den Vorteil, dass das Verschweißen mit einem Schneiden der Platten kombiniert werden kann. Mittels des Lasers erfolgt ein Schneiden des Plattenstapels, so dass der Verbundwerkstoff eine vorgegebene Form erhält. Während die Herstellung herkömmlicher Verbundwerkstoffe, die als Schneidbretter für Lebensmittel geeignet sind, es erfordert, deren einzelne Kunststoffplatten zunächst zurechtzuschneiden, dann aufeinander anzuordnen und schließlich an ihren Rändern miteinander zu verbinden, ermöglicht es diese Ausführungsform des erfindungsgemäßen Verfahrens, die einzelnen Platten gleichzeitig auf eine gewünschte Größe, beispielsweise die Größe eines Schneidbretts zurechtzuschneiden und dabei ihre Ränder mittels einer Schweißnaht zu verbinden. Dies führt zu einer einfachen Herstellung des Verbundwerkstoffs.

Eine noch weitere Vereinfachung der Herstellung kann erreicht werden, indem das Schneiden des Plattenstapels vorzugsweise so erfolgt, dass mehrere Verbundwerkstoffe aus dem Plattenstapel erhalten werden. So können ausgehend von Platten mit großen Abmessungen mehrere Verbundwerkstoffe mit kleineren Abmessungen erhalten werden, wobei beim Schneiden mittels des Lasers nicht nur der Rand eines Verbundwerkstoffs, sondern gleichzeitig auch noch der Rand des benachbarten Verbundwerkstoffs mit einer Schweißnaht versehen werden kann. Dies ermöglicht die Massenproduktion des Verbundwerkstoffs in Abmessungen, die für eine Verwendung als Schneidbrett geeignet sind.

### Kurze Beschreibung der Zeichnungen

Ausführungsbeispiele der Erfindung sind in den Zeichnungen dargestellt und werden in der nachfolgenden Beschreibung näher erläutert.
- Fig. 1: zeigt schematisch eine Schnittseitenansicht eines Verbundwerkstoffs.
- Fig. 2: zeigt schematisch die Herstellung mehrerer Verbundwerkstoffe in einem Verfahren gemäß einem Ausführungsbeispiel der Erfindung.

### Ausführungsbeispiele der Erfindung

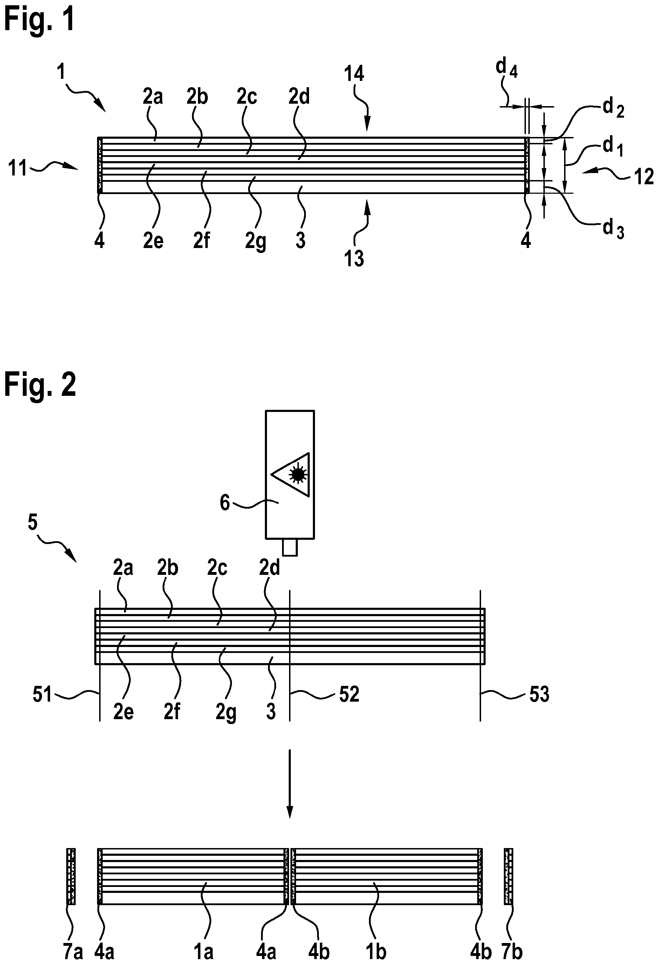

Ein Verbundwerkstoff 1 ist in Fig. 1 dargestellt. Er weist eine rechteckige Form auf, von der in der Schnittseitenansicht in Fig. 1 zwei Ränder 11, 12, die Unterseite 13 und die Oberseite 14 zu sehen sind. Der Verbundwerkstoff 1 besteht aus sieben ersten Platten 2a-g und einer zweiten Platte 3, auf welcher die ersten Platten 2a-g angeordnet sind. Die ersten Platten 2a-g weisen jeweils eine erste Dicke d₂ von 2,5 mm auf. Die zweite Dicke d₃ der zweiten Platte 3 beträgt 5 mm. Damit ergibt sich eine Gesamtdicke d₁ des Verbundwerkstoffs 1 von 22,5 mm. Alle Platten 2a-g, 3 weisen denselben Flächeninhalt auf und sind deckungsgleich aufeinander angeordnet. Sie bestehen alle aus unbeschichtetem Low-Density-Polyethylen (LDPE). Um alle Ränder des Verbundwerkstoffs 1, d. h. sowohl die dargestellten Ränder 11, 12 als auch die vor und hinter der Papierebene liegenden nicht dargestellten Ränder, läuft eine Schweißnaht 4 mit einer Dicke d₄ von 1,0 mm um. Diese Schweißnaht 4 wurde thermisch mittels eines CO₂-Lasers erzeugt.

Der Verbundwerkstoff 1 wird als Schneidbrett für Lebensmittel verwendet. Hierzu wird er so in einer nicht dargestellten Halterung angeordnet, dass seine Unterseite 13 der Unterseite der Halterung zugewandt ist. Diese Unterseite der Halterung weist eine Antirutschbeschichtung auf, um ein Verrutschen auf einer Arbeitsfläche zu verhindern. Die Oberseite 14 des Verbundwerkstoffs ist frei zugänglich. Sie wird als Schneidfläche für Lebensmittel verwendet. Nach Benutzung kann der Verbundwerkstoff 1 aus der Halterung entnommen und in einer Geschirrreinigungsmaschine gereinigt und desinfiziert werden. Sobald seine Oberseite 14 so tiefe Einschnittkerben aufweist, dass er nicht mehr im Einklang mit dem HACCP-Konzept als Schneidbrett verwendet werden darf, wird ausgehend von einem der Ränder 11, 12 die Schweißnaht 4 mittels eines Messers zwischen der obersten ersten Platte 2a und der darunterliegenden erste Platte 2b durchtrennt. Die oberste erste Platte 2a kann dann vom Verbundwerkstoff abgehoben und entsorgt werden. Anschließend kann der Verbundwerkstoff 1 mit der frischen Oberfläche der zweitobersten ersten Platte 2b als Schneidbrett weiter benutzt werden. Bei weiterer Abnutzung des Verbundwerkstoffs 1 können die verbleibenden Platten 2b-g nacheinander abgelöst werden bis nur noch die zweite Platte 3 verbleibt. Sobald auch deren Oberfläche tiefe Einschnitte aufweist, ist die maximale Lebensdauer des Verbundwerkstoffs 1 erreicht und seine Reste werden entsorgt. Über die gesamte Einsatzdauer des Verbundwerkstoffs 1 gewährleistet die zweite Dicke d₃ der zweiten Platte 3, dass er ohne Verbiegen als Schneidbrett verwendet werden kann.

Um mehrere Verbundwerkstoffe 1a, 1b herzustellen, ist es in einem Ausführungsbeispiel des erfindungsgemäßen Verfahrens vorgesehen, dass erste Platten 2a-2g deckungsgleich auf einer zweiten Platte 3 angeordnet werden, um einen Plattenstapel 5 zu erhalten. Dieser ist in einer schematischen Schnittseitenansicht im oberen Teil der Fig. 2 dargestellt. Der Plattenstapel 5 wird entlang mehrerer Schnittlinien 51, 52, 53 mittels eines CO₂-Lasers 6 geschnitten. Weitere nicht dargestellte Schnitte erfolgen entlang Schnittebenen, die parallel zur Papierebene verlaufen. Das Ergebnis dieses Schneidens ist im unteren Teil der Fig. 2 dargestellt. Ein erster Verbundwerkstoff 1a mit einer umlaufenden Schweißnaht 4a und ein zweiter Verbundwerkstoff 1b mit einer umlaufenden Schweißnaht 4b wurden aus dem Plattenstapel 5 herausgetrennt. Dabei erfolgte zeitgleich mit dem Schneiden des Plattenstapels 5 ein Verschweißen der Ränder der ersten Platten 2a-g und der zweiten Platte 3 entlang der Schnittebenen, so dass alle Ränder der Verbundwerkstoffe 1a, 1b mit Schweißnähten 4a, 4b verbunden wurden. Schnittreste 7a, 7b werden nach der Herstellung der Verbundwerkstoffe 1a, 1b entsorgt. Das Verfahren gemäß diesem Ausführungsbeispiel der Erfindung ermöglicht die Fertigung mehrerer Verbundwerkstoffe 1, 1b aus dem Plattenstapel 5 in einem einzigen Arbeitsgang.

## Patentansprüche

1. Verfahren zur Herstellung eines Verbundwerkstoffs (1, 1a-b), aufweisend mehrere aufeinander angeordnete erste Platten (2a-g), die jeweils aus demselben Kunststoff bestehen, die jeweils denselben Flächeninhalt aufweisen und die jeweils eine erste Dicke (d₂) aufweisen, wobei alle benachbarten Platten an allen Rändern (11, 12) des Verbundwerkstoffs (1, 1a-b) mittels einer Schweißnaht (4, 4a, 4b) thermisch miteinander verschweißt sind umfassend die folgenden Schritte:
- Bereitstellen mehrerer erster Platten (2a-g), die aus demselben Kunststoff bestehen, die jeweils eine erste Dicke (d₂) im Bereich von 1,5 mm bis 3,0 mm aufweisen, und die jeweils denselben Flächeninhalt aufweisen,
- Deckungsgleiches Anordnen der ersten Platten (2a-g) aufeinander, um einen Plattenstapel (5) zu erhalten,
- Thermisches Verschweißen aller Platten (2a-g, 3) des Plattenstapels (5) mittels eines Lasers (6), um den Verbundwerkstoff (1, 1a-b) zu erhalten,
**dadurch gekennzeichnet, dass** mittels des Lasers (6) ein Schneiden des Plattenstapels (5) gleichzeitig mit dem thermischen Verschweißen erfolgt, so dass der Verbundwerkstoff (1, 1a-b) eine vorgegebene Form erhält.

2. Verfahren zur Herstellung eines Verbundwerkstoffs (1, 1a-b) nach Anspruch 1, **dadurch gekennzeichnet, dass** die ersten Platten (2a-g) auf einer zweiten Platte (3) angeordnet werden, die aus demselben Kunststoff wie die ersten Platten (2a-g) besteht, die denselben Flächeninhalt aufweist wie die ersten Platten (2a-g), und die eine zweite Dicke (d₃) aufweist, welche größer als die erste Dicke (d₂) ist, wobei bei dem thermischen Verschweißen aller Platten (2a-g, 3) die zweite Platte (3) mit einer ersten Platte (2g) verschweißt wird.

3. Verfahren zur Herstellung eines Verbundwerkstoffs (1, 1a-b) nach Anspruch 2, **dadurch gekennzeichnet, dass** die zweite Dicke (d₃) im Bereich von 4,0 mm bis 6,0 mm liegt.

4. Verfahren zur Herstellung eines Verbundwerkstoffs (1, 1a-b) nach einem der Ansprüche 1 bis 3, **dadurch gekennzeichnet, dass** die Gesamtdicke (d₁) des Verbundwerkstoffs (1, 1a-b) im Bereich von 20 mm bis 60 mm liegt.

5. Verfahren zur Herstellung eines Verbundwerkstoffs (1, 1a-b) nach einem der Ansprüche 1 bis 4, **dadurch gekennzeichnet, dass** das Verschweißen mittels einer Schweißnaht (4, 4a, 4b) mit einer Breite (d₄) im Bereich von 0,5 mm bis 1,5 mm erfolgt.

6. Verfahren zur Herstellung eines Verbundwerkstoffs (1, 1a-b) nach einem der Ansprüche 1 bis 5, **dadurch gekennzeichnet, dass** der Kunststoff ausgewählt ist aus der Gruppe der Polyethylene, der Polypropylene, der Polyoxymethylene sowie deren Copolymeren.

7. Verfahren zur Herstellung eines Verbundwerkstoffs (1, 1a-b) nach einem der Ansprüche 1 bis 6, **dadurch gekennzeichnet, dass** alle Platten unbeschichtet sind.

8. Verfahren nach einem der Ansprüche 1 bis 7, **dadurch gekennzeichnet, dass** das Schneiden des Plattenstapels so erfolgt, so dass mehrere Verbundwerkstoffe (1a-b) aus dem Plattenstapel erhalten werden.

## Claims

1. Method for producing a composite material (1, 1a-b) having several first plates arranged one on top of the other (2a-g) which are respectively composed of the same plastic, which respectively have the same area and which respectively have a first thickness (d₂), wherein all adjacent plates are thermally welded together at all edges (11, 12) of the composite material (1, 1a-b) by means of a weld (4, 4a, 4b), comprising the following steps:
- Providing several first plates (2a-g) which are composed of the same plastic, which respectively have a first thickness (d₂) ranging from 1.5 mm to 3.0 mm, and which respectively have the same area,
- Congruent arrangement of the first plates (2a-g) one on top of the other in order to obtain a plate stack (5),
- Thermal welding of all plates (2a-g, 3) of the plate stack (5) by means of a laser (6) in order to obtain the composite material (1, 1a-b),
**characterised in that** cutting of the plate stack (5) by means of the laser (6) takes place at the same time as the thermal welding, such that the composite material (1, 1a-b) obtains a predetermined shape.

2. Method for producing a composite material (1, 1a-b) according to claim 1, **characterised in that** the first plates (2a-g) are arranged on a second plate (3) which is composed of the same plastic as the first plates (2a-g), which has the same area as the first plates (2a-g) and which has a second thickness (d₃) which is greater than the first thickness (d₂), wherein the second plate (3) is welded to a first plate (2g) during the thermal welding of all plates (2a-g, 3).

3. Method for producing a composite material (1, 1a-b) according to claim 2, **characterised in that** the second thickness (d₃) ranges from 4.0 mm to 6.0 mm.

4. Method for producing a composite material (1, 1a-b) according to one of claims 1 to 3, **characterised in that** the total thickness (d₁) of the composite material (1, 1a-b) ranges from 20 mm to 60 mm.

5. Method for producing a composite material (1, 1a-b) according to one of claims 1 to 4, **characterised in that** the welding takes place by means of a weld (4, 4a, 4b) having a width (d4) ranging from 0.5 mm to 1.5 mm.

6. Method for producing a composite material (1, 1a-b) according to one of claims 1 to 5, **characterised in that** the plastic is selected from the group of polyethylenes, polypropylenes, polyoxymethylenes and their copolymers.

7. Method for producing a composite material (1, 1a-b) according to one of claims 1 to 6, **characterised in that** all plates are uncoated.

8. Method according to one of claims 1 to 7, **characterised in that** the cutting of the plate stack takes place in such a manner that several composite materials (1a-b) are obtained from the plate stack.

## Revendications

1. Procédé de fabrication d'un matériau composite (1, 1a-b) comportant plusieurs premières plaques (2a-g) disposées les unes sur les autres et composées d'une même matière synthétique, et présentant chacune une même superficie et présentant chacune une même première épaisseur (d₂), toutes les plaques adjacentes étant soudées thermiquement sur tous les bords (11, 12) du matériau composite (1, 1a-b) au moyen d'un cordon de soudure (4, 4a, 4b), le procédé comprenant les étapes suivantes :
- la préparation de plusieurs premières plaques (2a-g) composées de la même matière synthétique et présentant chacune une première épaisseur (d₂) située dans une plage allant de 1,5 mm à 3,0 mm et présentant chacune la même superficie,
- la disposition congruente des premières plaques (2a-g) les unes sur les autres pour obtenir un empilement de plaques (5), et
- le soudage thermique de toutes les plaques (2a-g, 3) de l'empilement de plaques (5) par laser (6) afin d'obtenir le matériau composite (1, 1a-b);
**caractérisé en ce que** le laser (6) produit une découpe de l'empilement de plaques (5) simultanément au soudage thermique, de manière à donner une forme prédéterminée au matériau composite (1, 1a-b).

2. Procédé de fabrication d'un matériau composite (1, 1a-b) selon la revendication 1, **caractérisé en ce que** les premières plaques (2a-g) sont disposées sur une deuxième plaque (3) composée de la même matière synthétique que les premières plaques (2a-g) et présentant la même superficie que les premières plaques (2a-g) et présentant une deuxième épaisseur (d₃) qui est supérieure à la première épaisseur (d₂), dans lequel, lors du soudage thermique de toutes les plaques (2a-g, 3), la deuxième plaque (3) est soudée à une première plaque (2g).

3. Procédé de fabrication d'un matériau composite (1, 1a-b) selon la revendication 2, **caractérisé en ce que** la deuxième épaisseur (d₃) se situe dans une plage allant de 4,0 mm à 6,0 mm.

4. Procédé de fabrication d'un matériau composite (1, 1a-b) selon l'une des revendications 1 à 3, **caractérisé en ce que** l'épaisseur totale (d₁) du matériau composite (1, 1a-b) se situe dans une plage allant de 20 mm à 60 mm.

5. Procédé de fabrication d'un matériau composite (1, 1a-b) selon l'une des revendications 1 à 4, **caractérisé en ce que** le soudage est réalisé au moyen d'un cordon de soudure (4, 4a, 4b) présentant une largeur (d₄) située dans une plage allant de 0,5 mm à 1,5 mm.

6. Procédé de fabrication d'un matériau composite (1, 1a-b) selon l'une des revendications 1 à 5, **caractérisé en ce que** la matière synthétique est choisie dans le groupe constitué par le polyéthylène, le polypropylène, le polyoxyméthylène ainsi que leurs copolymères.

7. Procédé de fabrication d'un matériau composite (1, 1a-b) selon l'une des revendications 1 à 6, **caractérisé en ce qu'**aucune des plaques ne présente de revêtement.

8. Procédé selon l'une des revendications 1 à 7, **caractérisé en ce que** la découpe de l'empilement de plaques est réalisée de manière à produire plusieurs matériaux composites (1a-b) à partir dudit empilement de plaques.
